# EUROPEAN PATENT SPECIFICATION

(11) **EP 1 954 390 B1**
(45) Date of publication and mention of the grant of the patent: **27.02.2013**
(21) Application number: 06810029.6
(22) Date of filing: 16.10.2006
(51) Int. Cl.: B01J 19/24

(54) **APPARATUS FOR CONTROLLING CATALYTIC COMBUSTION, WHERE SAID CATALYTIC COMBUSTION IS COUPLED TO ENDOTHERMIC REACTIONS**
VORRICHTUNG ZUR STEUERUNG DER KATALYTISCHEN VERBRENNUNG, WOBEI DIE KATALYTISCHE VERBRENNUNG MIT ENDOTHERMEN REAKTIONEN GEKOPPELT IST
APPAREIL DE CONTROLE DE COMBUSTION CATALYTIQUE, LADITE COMBUSTION CATALYTIQUE ETANT COUPLEE A DES REACTIONS ENDOTHERMIQUES

(30) Priority: 26.10.2005 IT RM20050532
(43) Date of publication of application: 13.08.2008
(73) Proprietor: Tecnimont KT - Kinetics Technology S.p.A., 00148 Roma (IT)
(72) Inventor: IAQUANIELLO, Gaetano, 00153 ROMA (IT)
(74) Representative: Sarpi, Maurizio
(86) International application number: PCT/IT2006/000738
(87) International publication number: WO 2007/049319

(56) References cited:
- WO-A-03/033132
- WO-A1-01/51194
- US-A1- 2002 071 797

## Description

### Field of the invention

The present invention relates to apparatuses characterized by the simultaneous presence of an endothermic reaction and a reaction of catalytic oxidation and more in particular to an improvement to said apparatuses that consists in controlling the quantity of heat produced by modulating the catalytic combustion through the regulation of the thickness and density of the layer of catalyst that is deposited on at least one of the faces that delimit the area where the exothermic reaction occurs, as well as in controlling the amount of fuel and/or combustion air.

In apparatuses of this type, for example plate reactors, the endothermic reaction and the exothermic-oxidation reaction are physically separated by a metal wall, through which the heat is transmitted. An example of application of said apparatus is represented by the production of H₂ through steam-reforming of hydrocarbons, where the heat of reaction is supplied by the combustion of a combustible gas such as natural gas or purge gas coming from the final purification of crude hydrogen.

### Basis of the invention

Plate steam-reforming apparatuses, in which on one side of the plate an endothermic reaction occurs, in the case of steam reforming, and on the other a hot fluid moves that supplies the heat for progress of the endothermic reaction, are well known.

In particular, there exist numerous patents based upon this geometry of plate apparatuses, characterized, for example, by the use of commercial catalysts and non-commercial catalysts, both for the endothermic reaction and for the oxidation reaction, as well as without the oxidation reaction.

See, for example, the apparatus described in the U.S. patents Nos. 5.015.444, 5.180.561 and 5.609.834.

In none of these patents, however, is the possibility of controlling the combustion for optimizing the course of the endothermic reaction hypothesised.

### Abstract of the Invention

The task of the present invention is to provide an answer to said need by carrying out, in a plate apparatus of the type referred to above, a control of the catalytic combustion such as to optimize the transfer of heat towards the endothermic side, minimizing, all other parameters being equal, the surface of heat exchange and the maximum temperature of the metal.

In the sequel of the present description, reference will be made, by way of non-limiting illustration, to an apparatus made up of a set of plates, which taken two by two define volumes where there alternately occurs a reaction of catalytic combustion that develops heat and an endothermic reaction that absorbs the heat developed by the first reaction. The endothermic reaction will be identified, purely by way of example, with the reaction of steam reforming.

### Brief description of the annexed drawings

The description of the invention will emerge more clearly from the ensuing detailed description, with reference to the annexed plate of drawings, in which:
Figure 1 is a schematic representation of a single cell of the apparatus forming the subject of the present patent application;
Figure 2 is a cross section of the cell illustrated in Figure 1;
Figure 3 is a set of cells with transverse passages; and
Figure 4 shows, by way of example, a pattern of the passages and hence of the release of the heat that is more elaborate.

### Detailed description of the invention

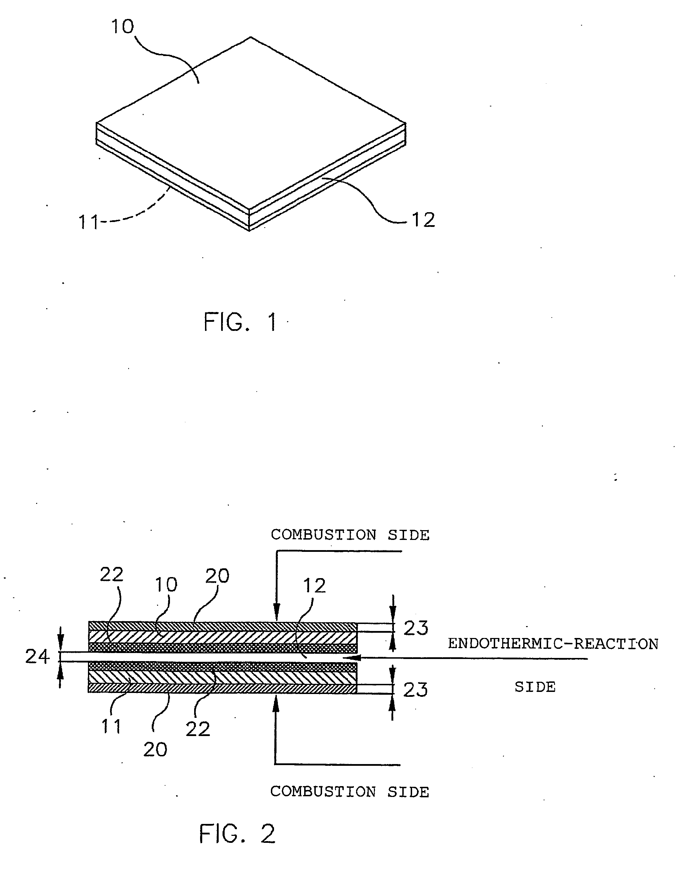

With reference to the figures, the apparatus forming the subject of the present patent contains a plurality of cells like the one illustrated in Figure 1. Said cell is delimited by two plates 10 and 11 and defines a volume designated by 12. For reasons of clarity of exposition, the volume 12 is the space where the endothermic reaction or those of combustion alternatively occur. The plates 10 and 11 may be smooth or corrugated, and applied thereon is a film that contains the catalyst: on one side, that of the reaction of combustion and, on the other, that of the endothermic reaction.

The various layers of catalyst are highlighted in Figure 2: the layer 22 is that of the endothermic reaction, which in the case in point could be steam reforming; the layer 20 is that of catalytic combustion. The thicknesses 23 and 24 of these layers is variable from zero to a maximum, so as to adapt the behaviour of the demand for heat of the reactions of steam reforming with that of combustion.

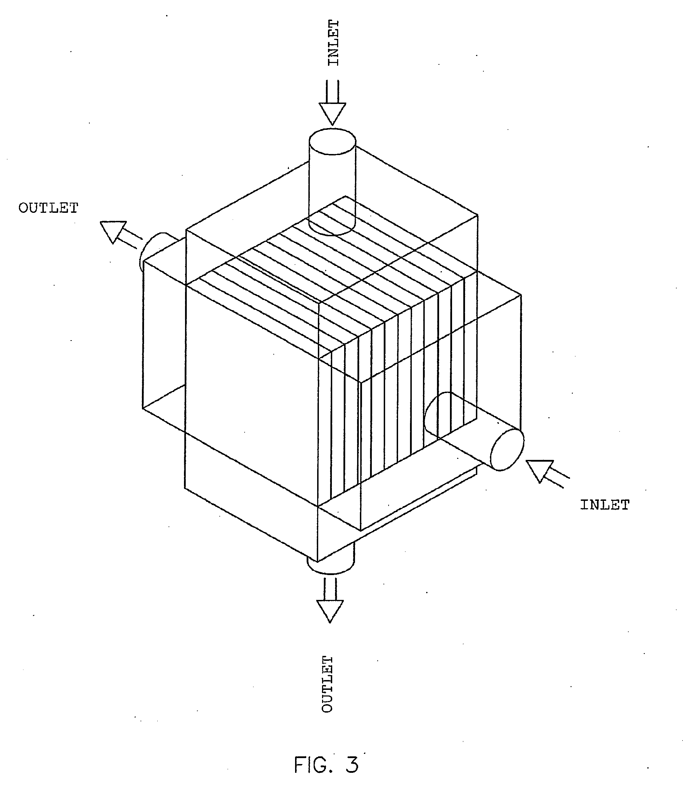

Illustrated in Figure 3, which represents schematically a cross flow of the currents, is a set of cells with transverse passages.

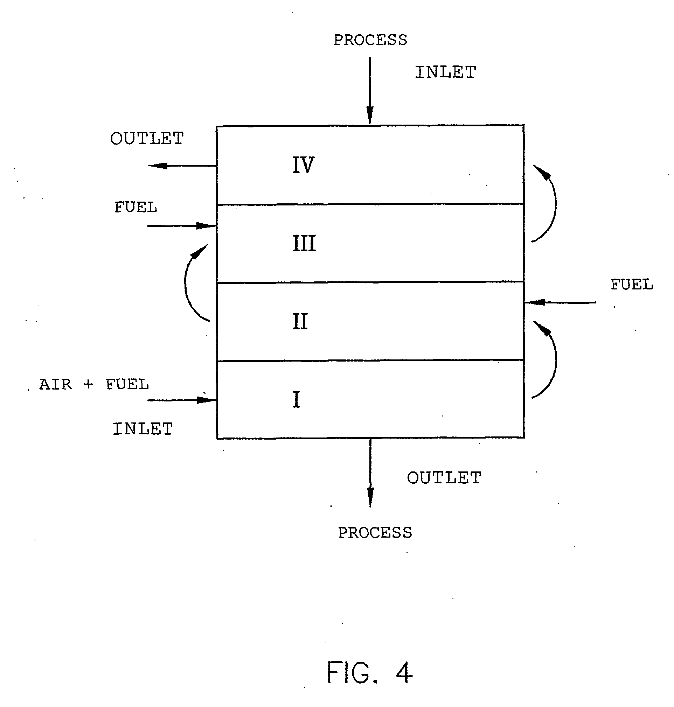

The optimization of the process can be such as to require a pattern of the passages and hence of the release of heat that is even more elaborate according to schemes like the one indicated in Figure 4, where the reaction of combustion is not completed in the first area, but part of the heat can be released in areas II and III, and even in area IV.

Hypothesised also in Figure 4 is the possibility of introducing additional fuel to enable a better control of the evolution of the temperature of the fumes.

The apparatus illustrated in Figure 3 or Figure 4 can produce hydrogen or synthesis gas through the reaction of steam reforming of hydrocarbons on one side, receiving the heat necessary through the controlled combustion of a fuel, which, once mixed with air, is introduced on the other side of the apparatus.

As has been said, according to a peculiar characteristic of the invention, the control of the heat produced by the combustion of the mixture of combustible gas and air is obtained principally through the deposition of layers of catalyst of different thickness and density, in extreme cases with zero content of catalyst, along the plates that form the apparatus. It is, however, possible to control combustion also through a differentiated supply of the fuel and/or combustion air.

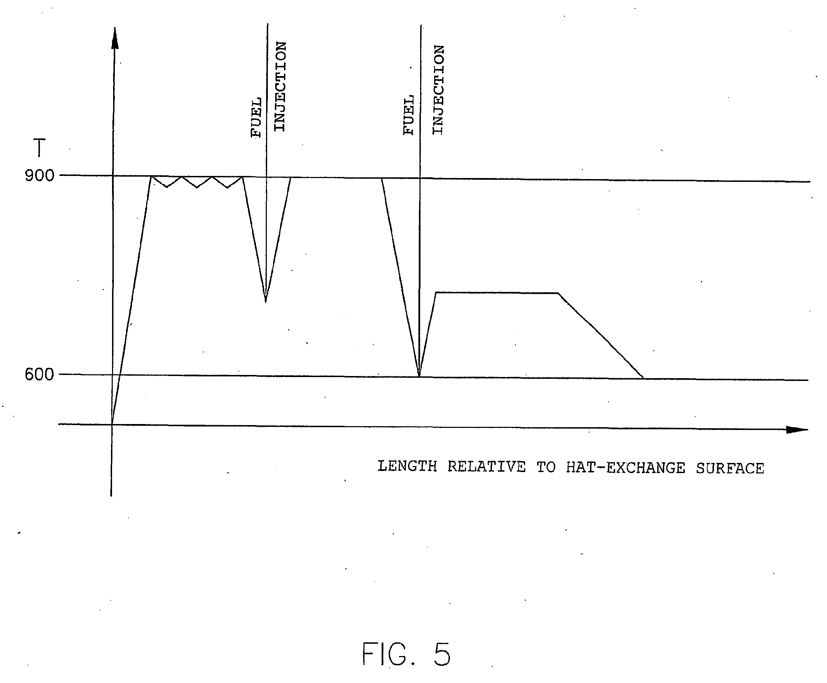

There is obtained in this way a variable profile of the temperature of the fumes that can readily adapt the requirement of heat of the endothermic reaction. As example of the evolution of said temperature of the fumes, reference may be made to Figure 5, which describes the evolution of the temperature of the fumes as a function of the surface of heat exchange.

Said modulation of the profile results, all other conditions being equal, in a smaller apparatus, in which the plates are subject to lower mechanical stresses. This is particularly important in the case of apparatuses such as steam-reforming apparatuses, where the peak temperatures of the surfaces of heat exchange are the ones that establish the conditions of design.

Deriving from the reduced dimensions of an apparatus according to the present invention are smaller heat losses and hence higher thermal efficiency, shorter times of start-up and of arrest, and, more in general, reduction of every transient.

Purely by way of indication, the thickness of the layer of catalyst of the steam reformer is in the region of 100-300 micron whilst that of combustion is in the region of 0-30 micron, with a density that can range from 10 to 100 g per square metre of the plates.

This apparatus operates, on the process side, with temperatures comprised between 300°C and 800°C and pressures between 10 barg and 30 barg, whilst, on the combustion side, it operates with temperatures of between the 300°C and 950°C and pressures slightly higher than ambient pressure. In any case, values of temperature and pressure outside said ranges can be obtained considering the specific geometry of the apparatus, the characteristics of the feedstock, and the S/C ratios used.

The invention forming the subject of the present patent is not limited to steam reforming but can be applied obviously to any endothermic reaction.

The invention has been described on the basis of a preferred embodiment provided purely by way of non-limiting example: it is evident, however, that numerous variations and modifications can be made by persons skilled in the branch for using the teachings provided in different apparatuses and systems, without thereby departing from the scope of the present invention as defined by in the ensuing claims.

## Claims

1. An apparatus in which at least one endothermic reaction and at least one reaction of catalytic combustion take place simultaneously, said reactions being physically separated by a metal wall or plates (10), through which the heat is transmitted, said apparatus being **characterized in that**:
- the heat produced by the catalytic combustion is controlled by modulating the reaction of catalytic combustion through the deposition of layers of catalyst (20) of different thickness and density along the face of the surface of heat exchange of the apparatus facing the reaction of catalytic combustion; and/or through the deposition of layers of catalyst (22) of different thickness and density, in extreme cases with zero content of catalyst (22), along the faces of the metal wall or plates (10) that delimit the areas of reaction of catalytic combustion facing the endothermic reaction, so that the demand for heat of the endothermic reaction is satisfied in an optimal way; wherein the fuel and/or air for supporting catalytic combustion is fed into the reaction zone at different points along the metal wall, for improving control and modulating the temperature of the fumes.

2. The apparatus according to claim 1 **characterized in that** it is made up of a set of metal plates (10) which taken two by two define volumes where there alternately occurs a reaction of catalytic combustion that develops heat and an endothermic reaction that absorbs the heat developed by the first reaction.

3. The apparatus according to preceding claims **characterized in that** the endothermic reaction is a reaction of steam reforming.

4. The apparatus according to Claim 3, in which gradual combustion is obtained by modifying or nullifying the thickness and/or the density of the catalyst in the supporting layer spread on the faces of the plates that delimit the area of catalytic combustion.

5. The apparatus according to Claim 2, 3 and 4, where the deposition of catalyst on the walls of the plates enables minimization of the resistance to the transfer of heat, increasing the coefficient of transfer of heat as a result of the generation of heat on the solid surface of the catalyst.

6. The apparatus according to Claim 2, 3, 4 and 5, where, as a result of the control of the profile of temperature on the fume side and on the process side and as a result of the compactness, there is an increase in the thermal efficiency.

7. The apparatus according to Claims 2 to 6, where the ratio between surface of exchange and volume is higher than that of commercial apparatuses that use pellet catalysts.

## Patentansprüche

1. Vorrichtung, in der mindestens eine endotherme Reaktion und mindestens eine Reaktion einer katalytischen Verbrennung gleichzeitig stattfinden, wobei die Reaktionen durch eine Metallwand oder Platten (10), durch welche die Wärme übertragen wird, physisch voneinander getrennt sind, wobei die Vorrichtung **dadurch gekennzeichnet ist, dass**:
- die durch die katalytische Verbrennung erzeugte Wärme gesteuert wird, indem die Reaktion der katalytischen Verbrennung durch die Abscheidung von Schichten eines Katalysators (20) von unterschiedlicher Dicke und Dichte entlang der Vorderseite der Wärmetauschfläche der Vorrichtung, die der Reaktion der katalytischen Verbrennung zugewandt ist, moduliert wird; und/oder durch die Abscheidung von Schichten eines Katalysators (22) von unterschiedlicher Dicke und Dichte, in Extremfällen gänzlich ohne Gehalt an Katalysator (22), entlang den Vorderseiten der die Bereiche der Reaktion der katalytischen Verbrennung begrenzenden Metallwand oder Platten (10), die der endothermen Reaktion zugewandt sind, moduliert wird, dergestalt, dass der Wärmebedarf der endothermen Reaktion auf eine optimale Weise erfüllt wird; wobei der Brennstoff und/oder die Luft zum Speisen der katalytischen Verbrennung an verschiedenen Punkten entlang der Metallwand in die Reaktionszone eingeleitet werden, um die Steuerung zu verbessern und die Temperatur der Dämpfe zu modulieren.

2. Vorrichtung nach Anspruch 1, **dadurch gekennzeichnet, dass** sie aus einem Satz Metallplatten (10) besteht, die, in Zweiergruppen angeordnet, Volumina definieren, in denen im Wechsel eine Reaktion einer katalytischen Verbrennung, die Wärme erzeugt, und eine endotherme Reaktion, welche die durch die erste Reaktion erzeugte Wärme absorbiert, stattfinden.

3. Vorrichtung nach den vorangehenden Ansprüchen, **dadurch gekennzeichnet, dass** die endotherme Reaktion eine Reaktion der Dampfreformierung ist.

4. Vorrichtung nach Anspruch 3, wobei eine graduelle Verbrennung durch Modifizieren oder Nullifizieren der Dicke und/oder der Dichte des Katalysators in der Stützschicht, die über die Vorderseiten der den Bereich der katalytischen Verbrennung begrenzenden Platten verteilt ist, erhalten wird.

5. Vorrichtung nach Anspruch 2, 3 und 4, wo die Abscheidung von Katalysator auf den Wänden der Platten eine Minimierung des Widerstandes gegen eine Wärmeübertragung ermöglicht, wodurch der Wärmeübertragungskoeffizient infolge der Erzeugung von Wärme an der massiven Fläche des Katalysators vergrößert wird.

6. Vorrichtung nach Anspruch 2, 3, 4 und 5, wobei infolge der Steuerung des Profils der Temperatur auf der Dampfseite und auf der Prozessseite und infolge der Kompaktheit eine Steigerung des thermischen Wirkungsgrades stattfindet.

7. Vorrichtung nach den Ansprüchen 2 bis 6, wobei das Verhältnis zwischen Tauscherfläche und Volumen größer ist als das von kommerziellen Vorrichtungen, die mit Pelletkatalysatoren arbeiten.

## Revendications

1. Dispositif dans lequel au moins une réaction endothermique et au moins une réaction de combustion catalytique ont lieu simultanément, lesdites réactions étant séparées physiquement par une paroi ou des plaques en métal (10), à travers lesquelles la chaleur est transmise, ledit dispositif étant **caractérisé en ce que** :
- la chaleur produite par la combustion catalytique est contrôlée en modulant la réaction de combustion catalytique par le biais du dépôt de couches de catalyseur (20) d'épaisseur et de densité différentes le long de la face de la surface d'échange de chaleur du dispositif faisant face à la réaction de combustion catalytique ; et/ou par le biais du dépôt de couches de catalyseur (22) d'épaisseur et de densité différentes, dans des cas extrêmes avec une teneur nulle en catalyseur (22), le long des faces de la paroi ou des plaques en métal (10) qui délimitent les zones de réaction de combustion catalytique faisant face à la réaction endothermique, de manière que la demande de chaleur de la réaction endothermique soit satisfaite d'une manière optimale ; dans lequel le combustible et/ou l'air pour supporter la combustion catalytique est alimenté dans la zone de réaction en différents points le long de la paroi en métal, pour améliorer le contrôle et moduler la température des fumées.

2. Dispositif selon la revendication 1, **caractérisé en ce qu'**il est composé d'un ensemble de plaques en métal (10) qui, prises deux par deux, définissent des volumes où il se produit alternativement une réaction de combustion catalytique qui engendre de la chaleur et une réaction endothermique qui absorbe la chaleur engendrée par la première réaction.

3. Dispositif selon les revendications précédentes, **caractérisé en ce que** la réaction endothermique est une réaction de reformage à la vapeur.

4. Dispositif selon la revendication 3, dans lequel la combustion progressive est obtenue en modifiant ou en annulant l'épaisseur et/ou la densité du catalyseur dans la couche de support étalée sur les faces des plaques qui délimitent la zone de combustion catalytique.

5. Dispositif selon la revendication 2, 3 et 4, dans lequel le dépôt de catalyseur sur les parois des plaques permet une minimisation de la résistance au transfert de chaleur, une augmentation du coefficient de transfert de chaleur comme conséquence de la génération de chaleur sur la surface solide du catalyseur.

6. Dispositif selon la revendication 2, 3, 4 et 5, dans lequel, comme conséquence du contrôle du profil de température sur le côté fumées et sur le côté processus et comme conséquence de la compacité, il existe une augmentation du rendement thermique.

7. Dispositif selon les revendications 2 à 6, dans lequel le rapport entre surface d'échange et volume est supérieur à celui de dispositifs commerciaux qui utilisent des catalyseurs en pellets.
